# EUROPÄISCHE PATENTSCHRIFT

(11) **EP 1 055 780 B1**
(45) Veröffentlichungstag und Bekanntmachung des Hinweises auf die Patenterteilung: **23.07.2003**
(21) Anmeldenummer: 99106596.2
(22) Anmeldetag: 31.03.1999
(51) Int. Cl.: E03B 11/02

(54) **Wasserspeicher**
Water reservoir
Réservoir d'eau

(43) Veröffentlichungstag der Anmeldung: 29.11.2000
(73) Patentinhaber: Peintner, Kurt, 39040 NAZ Sciaves (BZ) (IT)
(72) Erfinder: Peintner, Kurt, 39040 NAZ Sciaves (BZ) (IT)
(74) Vertreter: Oberosler, Ludwig

(56) Entgegenhaltungen:
- FR-A- 2 616 042
- GB-A- 1 508 256
- GB-A- 2 314 368
- US-A- 5 628 484

## Beschreibung

Es ist bekannt daß insbesondere bei Bauarbeiten ein offener Wasserspeicher verwendet wird um eine gewisse Wassermenge, zum Beispiel für das Reinigen der mit Mörtel beschmutzten Geräte, zum Schöpfen von kleineren Wassermengen und zum Naßmachen von Werkzeugen oder Materialien, zur Verfügung zu haben. Meistens wird dieser Wasserspeicher in der Nähe der Betonmischmaschine aufgestellt und über einen Schlauch bis an den Rand mit Wasser gefüllt.

Diese Anordnung wird gewählt weil während der Zubereitung der Betonmischung öfters mit einem Kübel kleinere Wassermengen aus dem Speicher geschöpft werden und in die Betonmischmaschine geschüttet werden um so die gewünschte Konsistenz der Betonmischung zu erhalten. Weiters wird dieser Speicher für die Reinigung der mit Mörtel beschmutzten Geräte und für das Einweichen von Materialien benutzt, damit sich diese mit Wasser vollsaugen können.

Als Speicher für derartige Zwecke wird fast durchwegs ein leeres metallenes Ölfaß stehend und ohne Deckel verwendet. Während der kalten Jahreszeit wird dieses Faß mit dem Boden so auf Steine oder Bausteine gestellt, daß unter dem Faß ein Feuer entzündet werden kann damit das während der Nacht sich an der Wasseroberfläche gebildete Eis schmilzt.

Es ist oft umständlich an Baustellen, wo der Boden öfters sehr uneben ist, diesen Wasserspeicher so aufzustellen, daß er eben, standfest und etwas vom Boden erhoben steht. Es kann immer wieder bemerkt werden daß, insbesondere wenn öfters Wasser aus diesem Speicher von mehreren Arbeitern entnommen wird, das Wasserschlauchende in den Wasserspeicher gelegt wird und das Wasser dauernd rinnt, damit jeder der Wasser entnehmen will, den Speicher immer randvoll gefüllt vorfindet. Dies bringt eine erhebliche Wasserverschwendung mit sich, in der Umgebung des Wasserspeichers bilden sich Wasserpfützen, welche öfters auch größere Ausmaße annehmen weil sich der Boden durch Einschlämmen von Zement und/oder Kalk verdichtet und das Versickern des überlaufenden Wassers verhindert. Muß der Speicher entleert werden so wird er gekippt was unter Umständen den Kraftaufwand zweier Personen erfordert und eine Überflutung der Speicherumgebung verursacht.

Die Erfindung stellt sich die Aufgabe einen Wasserspeicher der eingangs erwähnten Art zu schaffen welcher auch bei unebenen oder unregelmäßigem Boden sicher und standfest, mit waagrechtem oberen Rand und mehr oder weniger vom Boden erhoben aufgestellt werden kann, welcher eine Wasserverschwendung verhindert, ein einfaches Entleeren ermöglicht und als Wasserverteiler für weitere Einrichtungen an der Baustelle dient.

Diese Aufgabe wird erfindungsgemäß durch einen Behälter gelöst welcher vorzugsweise zylindrische Form hat und an der Außenwand im Bodenbereich mit vorzugsweise drei, voneinander unabhängig höhenverstellbaren Stellfüßen, versehen ist. Im oberen Bereich des erfindungsgemäßen Behälters ist an der Innenseite ein bekanntes durch Schwimmer betätigtes Füllventil für die Wasserzuleitung vorgesehen. Diese Fülleinrichtung ist durch ein Schutzblech abgedeckt so daß sie nicht beschädigt werden kann. Vorzugsweise ist im Bereich der Zuleitung zum Füllventil, außen am Behälter, ein Wasserverteiler vorgesehen, dieser weist mehrere, jeweils mit Absperrventil versehene Wasseranschlüsse auf. Für die Zuleitung zum Wasserverteiler und zum Füllventil ist vorzugsweise jeweils ein eigenes Absperrventil vorgesehen.

Im Bereich des Behälterbodens, eventuell in leicht höherer Position ist ein Auslaufventil für die Entleerung des Behälters vorgesehen. Durch die etwas erhöhte Position dieses Ventiles wird dieses nicht durch den sich am Boden abgesetzten Sand und/oder Mörtel verstopft.

Einige an der Behälteraußenseite angebrachte Griffe erleichtern den Transport und die Aufstellung des Behälters, diese Griffe können eventuell gelenkig an der Behälterwand angebracht sein oder auch durch Ringe oder Bügel ersetzt sein welche das Einführen von Stangen oder von Schaufelstielen ermöglichen um so den Transport zu erleichtern.

Im Bodenbereich sind an der Behälteraußenwand mindestens drei höhenverstellbare Standfüße so angebracht daß Bodenunebenheiten ausgeglichen werden können und daß der Behälterboden etwas erhöht vom Erdboden sich befindet um eventuell unter dem Behälter ein Feuer entzünden zu können.

Die Erfindung wird anschließend anhand eines in der beigelegten Zeichnung schematisch dargestellten erfindungsgemäßen Wasserspeichers näher erklärt, wobei die Zeichnung rein erklärenden, nicht begrenzenden Zweck erfüllt.

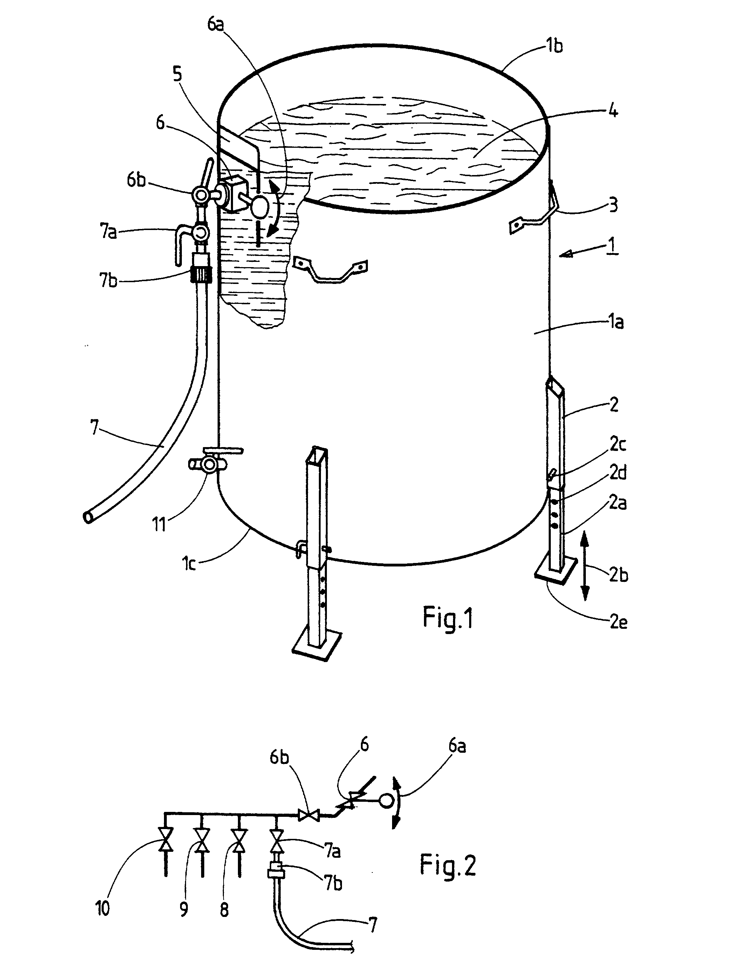

Die Fig. 1 zeigt eine perspektivische Darstellung eines erfindungsgemäßen Wasserspeichers mit drei höhenverstellbaren Standbeinen und mit, im Bereich des Füllventiles, im Schnitt gezeigter Behälterwand.

Die Fig. 2 zeigt die schematische Darstellung des an der Behälteraußenwand angebrachten Wasserverteilers mit Füllventil.

Der zylindrische Wasserspeicher 1 besteht aus einer Wand 1a mit Boden 1c und oberem Rand 1b. An der Behälteraußenseite sind, im Bereich des oberen Randes, Griffe 3 angebracht während außen im Bodenbereich Führungsprofile 2 angebracht sind in welchen Standbeine 2a mit Auflageplatten 2e höhenverstellbar 2b durch Steckbolzen 2c, welche die Bohrungen 2d an den Standbeinen 2a durchdringen, fixierbar sind.

Im Bodenbereich, vom Behälterboden 1c etwas distanziert, ist ein Auslaufventil 11 vorgrsehen durch welches das Wasser abgelassen werden kann ohne daß der sich am Boden 1c abgesetzte Schlamm und/oder Sand den Abfluß verlegt.

Im oberen Bereich der Behälteraußenwand 1b ist ein Wasserverteiler vorgesehen welcher einige Anschlüsse für Wasserleitungen mit je einem Absperrventil 8, 9, 10, ein Hauptabsperrventil 7a für die Zuleitung 7 mit Schlauchkupplung 7b und ein Absperrventil 6b für die Behälterfülleinrichtung mit Füllventil 6 mit Schwimmer 6a aufweist. Das Füllventil 6 samt Schwimmer 6a ist durch ein abmontierbares Schutzblech 5 oder ein Schutzgitter gegen Beschädigung geschützt.

Die Erfindung schließt nicht aus, daß an den Behälter 1a selbst und/oder an deren Standbeine 2a und oder an deren Führungsprofilen 2 ein oder mehrere Bleche befestigt werden können welche eine eventuelle Feuerstelle unter dem Behälter gegen zu starken Luftzug schützen.

Gemäß einer Weiterentwicklung des Erfindungsgedankens kann ein Feuerrost, mit oder ohne Aschenbehälter, oder ein Gasbrenner am Behälterboden 1c und oder an den Standbeinen, bzw. an den Führungsprofilen 2 befestigt werden.

## Patentansprüche

1. Wasserspeicher bestehend aus einer oben offenen Behälterwand (1a) und einem Behälterboden (1c), wobei an der Behälterwandaußenseite Führungsprofile (2) angebracht sind in welchen Standfüße (2a) höhenverstellbar (2b) in einer gewünschten Position durch Steckbolzen (2c) festgelegt werden können, wobei an der Behälteraußenwand feststehende oder schwenkbare Griffe (3) oder Ringe bzw. Bügel für das Einführen von Tragstangen vorgesehen sind und wobei ein Füllventil (6) mit Schwimmer (6a) am Ende einer Wasserzuleitung (7) im oberen Bereich der Behälterwand (1a) vorgesehen ist.

2. Wasserspeicher gemäß Patentanspruch 1, **dadurch gekennzeichnet, daß** das Füllventil (6) samt Schwimmer (6a) durch ein abmontierbares Schutzblech (5) oder Schutzgitter abgedeckt ist.

3. Wasserspeicher gemäß Patentanspruch 1, **dadurch gekennzeichnet, daß** im Bereich des Füllventiles (6), an der Außenseite der Behälterwand (1a), ein Wasserverteiler mit mehreren Wasseranschlüssen, versehen mit je einem Absperrventil (8, 9, 10), vorgesehen ist.

4. Wasserbehälter gemäß Patentanspruch 1, **dadurch gekennzeichnet, daß** die Wasserzuleitung (7) am Wasserverteiler mit einem eigenen Absperrventil (7a) und auch das Füllventil (6) mit einem eigenen Absperrventil (6b) versehen ist.

5. Wasserspeicher gemäß Patentanspruch 1, **dadurch gekennzeichnet, daß** im Bodenbereich an der Behälterwand (1a) ein mit Auslaufventil (11) vorgesehener Auslauf vorgesehen ist.

6. Wasserspeicher gemäß Patentanspruch 1, **dadurch gekennzeichnet, daß** im Bodenbereich an der Behälterwand (1a) und/oder an den Führungsprofilen (2), bzw. an den Standbeinen (2a) ein Feuerrost und/oder Schutzbleche für eine Feuerstelle angebracht werden können.

## Claims

1. Water storage tank, consisting of a tank wall (1a) open at the top and of a tank bottom (1c), there being mounted on the outside of the tank wall guide profiles (2), in which standing feet (2a) can be secured vertically adjustably (2b) in a desired position by means of socket pins (2c), fixed or pivotable grips (3) or rings or straps for the introduction of carrying rods being provided on the tank outer wall, and a filling valve (6) with a float (6a) being provided at the end of a water supply line (7) in the upper region of the tank wall (1a).

2. Water storage tank according to Patent Claim 1, **characterized in that** the filling valve (6) together with the float (6a) is covered by a demountable protective plate (5) or protective grid.

3. Water storage tank according to Patent Claim 1, **characterized in that** a water distributor with a plurality of water connections, each provided with a shut-off valve (8, 9, 10), is provided, on the outside of the tank wall (1a), in the region of the filling valve (6).

4. Water storage tank according to Patent Claim 1, **characterized in that** the water supply line (7) on the water distributor is provided with its own shut-off valve (7a) and also the filling valve (6) is provided with its own shut-off valve (6b).

5. Water storage tank according to Patent Claim 1, **characterized in that** an outflow provided with an outflow valve (11) is provided on the tank wall (1a) in the bottom region.

6. Water storage tank according to Patent Claim 1, **characterized in that** a fire grate and/or protective plates for a fireplace can be mounted on the tank wall (1a) and/or on the guide profiles (2) or on the standing legs (2a) in the bottom region.

## Revendications

1. Réservoir d'eau composé d'une paroi de récipient supérieure (1a) ouverte et d'un fond de récipient (1c) où, sur la face extérieure de la paroi de récipient, sont montés des profilés de guidage (2), dans lesquels des pieds d'appui (2a) peuvent être fixés, de façon réglable en hauteur (2b) à une position souhaitée, à l'aide de boulons d'enfichage (2c), où, sur la paroi extérieure de récipient, sont prévues des poignées (3) ou des anneaux ou des étriers, fixes ou pivotants, pour l'introduction de barre support et où une soupape de remplissage (6), munie d'un flotteur (6a) à l'extrémité d'une conduite d'alimentation en eau (7), est prévue dans la zone supérieure de la paroi de récipient (1a).

2. Réservoir d'eau selon la revendication 1, **caractérisé en ce que** la soupape de remplissage (6) avec le flotteur (6a) sont couverts par une tôle de protection (5) ou une grille de protection, démontable.

3. Réservoir d'eau selon la revendication 1, **caractérisé en ce que**, dans la zone de la soupape de remplissage (6), sur la face extérieure de la paroi de récipient (1a), est prévu un distributeur d'eau muni de plusieurs raccordements d'eau, chacun étant équipé d'une soupape d'isolement (8, 9, 10).

4. Réservoir d'eau selon la revendication 1, **caractérisé en ce que** la conduite d'alimentation en eau (7) est munie sur le distributeur d'eau d'une soupape d'isolement (7a) propre et, également, la soupape de remplissage (6) est munie d'une soupape d'isolement (6b) propre.

5. Réservoir d'eau selon la revendication 1, **caractérisé en ce que**, dans la zone de fond, sur la paroi de récipient (1a), est prévue une évacuation, équipée d'une soupape d'évacuation (11).

6. Réservoir d'eau selon la revendication 1, **caractérisé en ce que** dans la zone de fond, sur la paroi de récipient (1a) et/ou sur le profilé de guidage (2) ou sur les pieds supports (2a), peuvent être montées une grille de foyer et/ou des tôles protectrices pour un foyer.
